Europäisches Patentamt

European Patent Office

Office européen des brevets

(11) Veröffentlichungsnummer: **0 354 411**

**A1**

## (12) EUROPÄISCHE PATENTANMELDUNG

(21) Anmeldenummer: 89113793.7

(22) Anmeldetag: 26.07.89

(51) Int. Cl.4: **H02P 5/40**

(30) Priorität: 08.08.88 DE 3826865

(43) Veröffentlichungstag der Anmeldung:
**14.02.90 Patentblatt 90/07**

(84) Benannte Vertragsstaaten:
**AT DE FR GB IT SE**

(71) Anmelder: **Siemens Aktiengesellschaft**
**Wittelsbacherplatz 2**
**D-8000 München 2(DE)**

(72) Erfinder: **Behrendt, Michael**
**Bissinger Strasse 6**
**D-8520 Erlangen(DE)**

(54) **Verfahren zur Unterdrückung von mechanischen Schwingungen, die einem Drehzahlistwert überlagert sind und Schaltungsanordnung zur Durchführung des Verfahrens.**

(57) Die Erfindung bezieht sich auf ein Verfahren zur Unterdrückung von mechanischen Schwingungen ($u_{Wni}$), die von einer mittels eines stromrichtergespeisten Motors (4) angetriebenen Last (6) erzeugt und einem Drehzahlistwert ($u_{ni}$) überlagert sind und eine Schaltungsanordnung zur Durchführung des Verfahrens. Erfindungsgemäß wird durch Auskopplung eines Gleichspannungsanteils ($u_{Gni}$) des Drehzahlistwertes ($u_{ni}$) ein Wechselspannungsanteil ($u_{Wni}$) erzeugt, der in eine Rechteckspannung ($u_{Nni}$) gewandelt wird, deren Polarität und Frequenz proportional zur Polarität und Frequenz des Wechselspannungsanteils ($u_{Wni}$) des Drehzahlistwertes ($u_{ni}$) ist, daß aus dem Wechselspannungsanteil ($u_{Wni}$) eine Resonanzschwingung herausgefiltert und anschließend deren Betragsspannung ($u_{Fni}$) gebildet, und wird diese Betragsspannung ($u_{Fni}$) mittels der Rechteckspannung ($u_{Nni}$) zerhackt und proportional zu deren Polarität zu einem Zusatzstromsollwert ($u_{Zis}$) gewichtet zusammengesetzt. Somit kann man amplitudentreu gegen die mechanische Schwingung ($u_{Wni}$) steuern, wodurch die Steuerung des Antriebs sich nicht aufschwingen kann.

FIG 1

### Verfahren zur Unterdrückung von mechanischen Schwingungen, die einem Drehzahlistwert überlagert sind und eine Schaltungsanordnung zur Durchführung des Verfahrens

Die Erfindung bezieht sich auf ein verfahren zur Unterdrückung von mechanischen Schwingungen, die von einer mittels eines stromrichtergespeisten Motors angetriebenen Last erzeugt und einem Drehzahlistwert überlagert sind und eine Schaltungsanordnung zur Durchführung des Verfahrens.

Bei stromrichtergespeisten Antrieben, wobei zwischen Antriebsmotor und Last ein Getriebe geschaltet ist, können durch Getriebelose verursachte mechanische, niederfrequente Schwingungen auf die Stromrichtersteuerung einwirken. Dabei überlagern diese mechanischen Schwingungen den Drehzahlistwert des Antriebsmotors, wobei der Drehzahlistwert mittels eines mit dem Antriebsmotor gekoppelten Tachogenerators erzeugt wird. Dieser mit einer mechanischen Schwingung überlagerte Drehzahlistwert wird einer Stromrichtersteuerung zugeführt, die eine Drehzahlregelung mit unterlagerter Stromregelung enthält. Durch diesen schwingungsbehafteten Drehzahlistwert kann sich die Stromrichtersteuerung aufschwingen. Die Frequenz der mechanischen Schwingung, auch als Resonanzfrequenz bekannt, wird durch die Last bzw. durch das Trägheitsmoment der Last, des Getriebes und des Antriebsmotors bestimmt.

Der Erfindung liegt nun die Aufgabe zugrunde, ein Verfahren zur Unterdrückung von mechanischen Schwingungen und eine Schaltungsanordnung zur Durchführung des verfahrens anzugeben, wodurch ein Zusatzstromsollwert erzeugt wird, mit dem phasen- und amplitudentreu gegen die mechanischen Schwingungen gesteuert werden kann.

Diese Aufgabe wird erfindungsgemäß dadurch gelöst, daß durch Auskopplung eines Gleichspannungsanteils des Drehzahlistwertes ein Wechselspannungsanteil erzeugt wird, der in eine Rechteckspannung gewandelt wird, deren Polarität und Frequenz zur Polarität und Frequenz des Wechselspannungsanteils des Drehzahlistwertes proportional ist, daß aus dem Wechselspannungsanteil eine Resonanzschwingung herausgefiltert und anschließend deren Betragsspannung gebildet wird, und daß diese Betragsspannung mittels der Rechteckspannung zerhackt und proportional zu deren Polarität zu einem Zusatzstromsollwert gewichtet zusammengesetzt wird. Mit Hilfe dieses Zusatzstromsollwertes, dessen Amplitude frequenzabhängig von der überlagerten mechanischen Schwingung ist, wird die dem Drehzahlistwert überlagerte Schwingung unterdrückt, indem dieser Zusatzstromsollwert einem Stromsollwert überlagert wird. Durch die Filterung wird jedoch nur die von der Last erzeugte mechanische Schwingung unterdrückt.

Bei einer Schaltungsanordnung zur Durchführung des Verfahrens, wobei eine Last mittels eines stromrichtergespeisten Motors angetrieben wird, dessen Drehzahlistwert von mechanischen Schwingungen der Last überlagert ist, ist der Drehzahlistwert einem Hochpaß zuführbar, dessen Ausgang einerseits mit einem Komparator und andererseits mit einem Bandpaßfilter mit nachgeschaltetem Betragsbildner verknüpft ist, dem ein Zusatzsollwertbildner nachgeschaltet ist, dessen zweiter Eingang mit dem Ausgang des Komparators verbunden ist.

Durch den Aufbau dieser Schaltungsanordnung kann man mit einfachen Mitteln die mechanische Schwingung, die durch eine ·Last einem Drehzahlistwert eines stromrichtergespeisten Motors überlagert ist, unterdrücken, wobei die mechanische Schwingung amplituden- und frequenzabhängig ist. Der Aufbau dieser Schaltungsanordnung enthält im wesentlichen bekannte Schaltungsteile, die jedoch in Kombination miteinander diese Schaltungsanordnung zur Durchführung des erfindungsgemäßen Verfahrens ergibt. Am .Ausgang dieser Schaltungsanordnung erhält man einen Zusatzstromsollwert, der von der überlagerten mechanischen Schwingung amplituden- und frequenzabhängig ist, der mit einem Stromsollwert verknüpft wird, so daß dem mit einer mechanischen Schwingung überlagerten Drehzahlistwert amplituden- und frequenztreu gegengesteuert werden kann.

Zur weiteren Erläuterung der Erfindung wird auf die Zeichnung bezug genommen, in der ein Ausführungsbeispiel nach der Erfindung schematisch veranschaulicht ist.

FIG 1 zeigt ein Blockschaltbild der Schaltungsanordnung zur Durchführung des erfindungsgemäßen Verfahrens, in

FIG 2 ist ein Wechselspannungsanteil $u_{Wni}$ eines Drehzahlistwertes $u_{ni}$ in einem Diagramm über der Zeit t dargestellt, in

FIG 3 ist eine Betragsspannung $u_{Fni}$ einer ausgefilterten Resonanzschwingung, die ·dem Drehzahlistwert $u_{ni}$ überlagert ist, in einem Diagramm über der Zeit t dargestellt, in

FIG 4 ist eine aus dem Wechselspannungsanteil $u_{Wni}$ des Drehzahlistwertes $u_{ni}$ erzeugte Rechteckspannung $u_{Nni}$ in einem Diagramm über der Zeit t veranschaulicht, in

FIG 5 ist ein Zusatzstromsollwert $u_{ZIs}$ in einem Diagramm über der Zeit t dargestellt und

FIG 6 zeigt eine Ausführungsform eines Zusatzsollwertbildners.

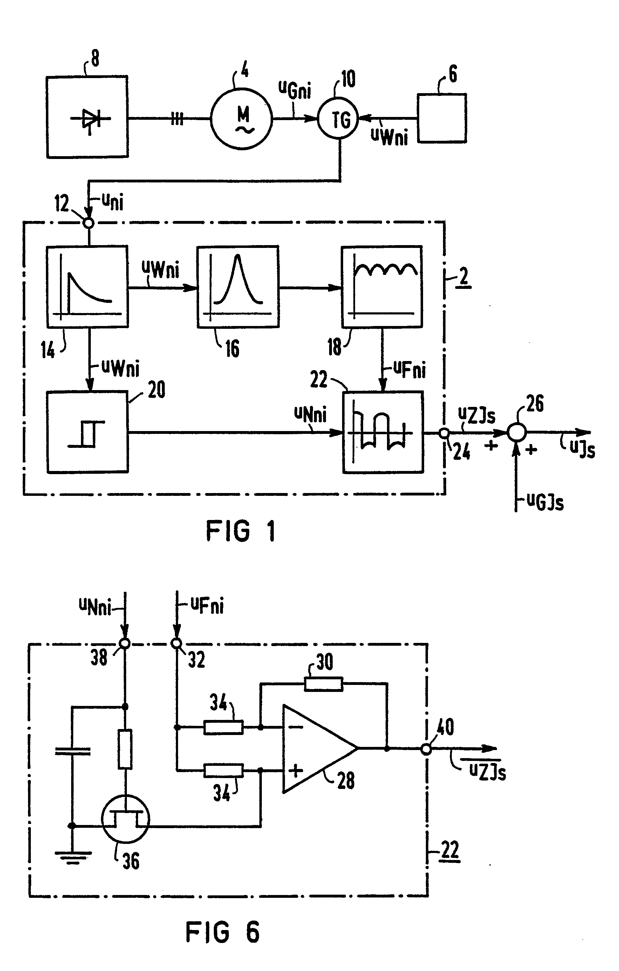

Die FIG 1 zeigt ein Blockschaltbild einer Schaltungsanordnung 2 zur Durchführung des erfindungsgemäßen Verfahrens zur Unterdrückung von mechanischen Schwingungen $u_{Wni}$, die sich einem Drehzahlistwert $u_{Gni}$ eines Antriebsmotors 4 überlagern. Die mechanischen Schwingungen $u_{Wni}$ werden von Getriebelose eines Getriebes, das zwischen dem Antriebsmotors 4 und einer Last 6 angeordnet ist, verursacht, wobei der Motor 4 mittels eines Stromrichters 8 mit Energie versorgt wird. Aus Übersichtlich keitsgründen ist das Getriebe nicht dargestellt. Der Drehzahlistwert $u_{ni}$ dieser Anordnung wird mittels eines Tachogenerators ermittelt, wobei dieser Drehzahlistwert $u_{ni}$ sich zusammensetzt aus einem Gleichanteil $u_{Gni}$ und einem Wechselanteil $u_{Wni}$. Dieser Drehzahlistwert $u_{ni}$ wird einem Eingang 12 der Schaltungsanordnung 2 zugeführt.

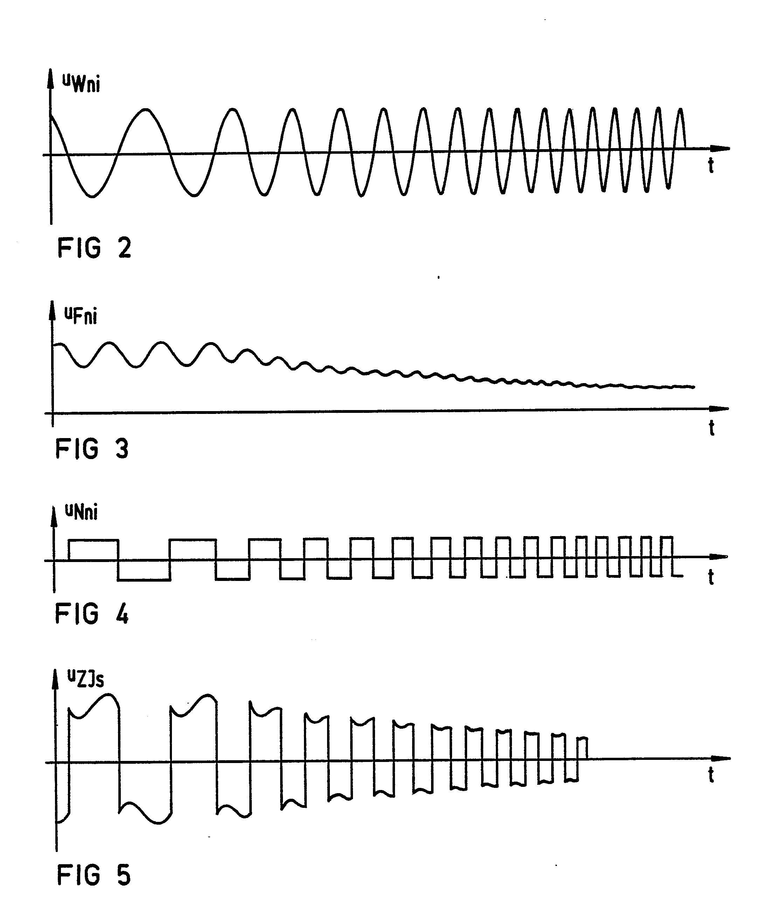

Die Schaltungsanordnung 2 enthält einen Hochpaß 14, einen Bandpaßfilter 16, einen Betragsbildner 18, einen Komparator 20 und einen Zusatzsollwertbildner 22. Dabei ist dem Eingang 12 der Hochpaß 14 nachgeschaltet. Der Hochpaß 14 ist so bemessen, daß der Gleichanteil $u_{Gni}$ des Drehzahlistwertes $u_{ni}$ ausgekoppelt wird, so daß am Ausgang des Hochpasses 14 der Wechselspannungsanteil $u_{Wni}$ ansteht. Dieser Wechselspannungsanteil $u_{Wni}$ ist in einem Diagramm über der Zeit t in FIG 2 dargestellt. Dieser Wechselspannungsanteil $u_{Wni}$ des Drehzahlistwertes $u_{ni}$ ist einerseits dem Bandpaßfilter 16 und andererseits dem Komparator zugeführt.

Der Komparator 20 erzeugt aus dem wechselspannungsanteil $u_{Wni}$ eine Rechteckspannung $u_{Nni}$, deren Polarität und Frequenz proportional zur Polarität und Frequenz des Wechselspannungsanteils $u_{Wni}$ ist. Diese Rechteckspannung $u_{Nni}$ ist in einem Diagramm über der Zeit t in FIG 4 dargestellt. Als Komparator 20 ist in bekannter Weise ein Ausgang eines Operationsverstärkers auf einen nicht invertierenden Eingang zurückgekoppelt, wogegen ein invertierender Eingang mit einer Bezugsspannungsquelle verbunden ist. Am Ausgang des Komparators 20 erhält man eine Rechteckspannung $u_{Nni}$, deren Flanken jeweils eine Nullstelle des Wechselspannungsanteils $u_{Wni}$ des Drehzahlistwertes $u_{ni}$ markiert, wobei diese Rechteckspannung $u_{Nni}$ als Zerhackerspannung bzw. Triggerspannung für den Zusatzsollwertbildner 22 verwendet wird.

Als Bandpaßfilter 16 ist ein Filter zweiter Ordnung vorgesehen, dessen Resonanzfrequenz gleich der Resonanzfrequenz der überlagerten mechanischen Schwingung $U_{Wni}$ ist. Als Schaltungsaufbau kann eine bekannte Schaltung, gemäß Abb. 14.32 aus "Halbleiter-Schaltungstechnik", U. Tietze, Ch. Schenk, 6. Auflage, Seiten 417 und 418, verwendet werden, wobei die Kondensatoren als Brücken vorzusehen sind. Dem Bandpaßfilter 16 ist ein Betragsbildner 18 nachgeschaltet, der die Ausgangsspannung des Bandpaßfilters 16 gleichrichtet. Diese gleichgerichtete Ausgangsspannung ist als Betragsspannung $U_{Fni}$ in einem Diagramm über der Zeit t in FIG 3 dargestellt. Auch bei der schaltungstechnischen Realisierung des Betragsbildners 18 kann eine bekannte Schaltung, gemäß Abb. 25.12 aus "Halbleiter-Schaltungstechnik", U. Tietze, Ch. Schenk, 6. Auflage, Seiten 787 und 788, verwendet werden.

Dem Betragsbildner 18 ist der Zusatzsollwertbildner 22 nachgeschaltet, dessen Ausführungsform in der FIG 6 näher dargestellt ist. Dieser Zusatzsollwertbildner 22 ist ebenfalls dem Komparator 20 nachgeschaltet. Mit Hilfe der erzeugten Rechteckspannung $u_{Nni}$, die als Zerhackerspannung bzw. Triggerspannung verwendet wird, wird die Betragsspannung $u_{Fni}$ zerhackt, wobei der Anfang und das Ende eines jeden Teilstücks der Betragsspannung $u_{Fni}$ durch die Nullstellen des Wechselspannungsanteils $u_{Wni}$ bzw. den Flanken der Recheckspannung $u_{Nni}$ bestimmt wird. Diese Teilstücke werden in der Polarität gewichtet und aneinander zu einem Zusatzstromsollwert $u_{Zls}$ zusammengesetzt, wobei die Polarität der Teilstücke proportional der Polarität der Rechteckspannung $u_{Nni}$ ist. Dieser Zusatzstromsollwert $u_{Zls}$ steht am Ausgang 24 der Schaltungsanordnung 2 an und ist in einem Diagramm über Zeit t in FIG 5 dargestellt.

Dieser Zusatzstromsollwert $u_{Zls}$ ist einem ersten Eingang eines Summiergliedes 26 zugeführt, an dessen zweiten Eingang ein Gleichanteil eines Stromsollwertes $u_{Gls}$ ansteht. Am Ausgang dieses Summiergliedes 26 erhält man einen Stromsollwert $u_{ls}$, der einer unterlagerten Stromregelung einer Steuerung des Stromrichters 8 zuführbar ist, wodurch gegen die mechanischen Schwingungen $u_{Wni}$ amplitudentreu gegengesteuert werden kann. Aus Übersichtlichkeitsgründen ist die Steuerung des Stromrichters 8 nicht dargestellt. Somit werden die mechanischen Schwingungen $u_{Wni}$ unterdrückt, wodurch die Steuerung sich nicht mehr aufschwingen kann.

In den FIG 2 bis 5 sind, wie bereits erwähnt, der Wechselspannungsanteil $u_{Wni}$, die Betragsspannung $u_{Fni}$, die Rechteckspannung $u_{Nni}$ und der Zusatzstromsollwert $u_{Zls}$ jeweils in einem Diagramm über die Zeit t dargestellt. Der Wechselspannungsanteil $u_{Wni}$ ist mit konstanter Amplitude und veränderlicher Frequenz dargestellt. Diese veränderliche Frequenz ändert die Amplitude der Betragsspannung $u_{Fni}$. Da die Rechteckspannung $u_{Nni}$ eine zum Wechselspannungsanteil $u_{Wni}$ proportionale Spannung ist, ist deren Frequenz proportional zur Frequenz des Wechselspannungsanteils $u_{Wni}$. Die mit Hilfe der Rechteckspannung $u_{Nni}$ aus der Betragsspannung $u_{Fni}$ erzeugte Zusatzstromsollwert $u_{Zls}$ ist amplituden- und frequenzabhängig.

In FIG 6 ist eine Ausführungsform eines Zusatzsollwertbildners 22 dargestellt. Dieser Zusatzsollwertbildner 22 enthält einen Operationsverstärker 28, dessen Ausgang über einen Widerstand 30 auf seinen invertierenden Eingang zurückgekoppelt ist. Ein erster Eingang 32 des Zusatzsollwertbilders 22, an den die Betragsspannung $u_{Fni}$ ansteht, ist jeweils über einen Widerstand 34 mit dem invertierenden und nichtinvertierenden Eingang des Operationsverstärkers 28 verbunden. Dabei sind die Widerstände 30 und 34 gleich. Außerdem ist der nichtinvertierende Eingang über einen Feldeffekttransistorschalter 36, auch FET-Schalter genannt, mit Erdpotential verbindbar. Dieser FET-Schalter 36 wird mittels der Recheckspannung $u_{Nni}$, die am zweiten Eingang 38 des Zusatzsollwertbildners 22 ansteht, gesteuert. Am Ausgang 40 erhält man einen Zusatzstromsollwert $\overline{u_{ZIs}}$, der gegenüber dem Zusatzstromsollwert $u_{ZIs}$ gemäß FIG 5 invertiert ist. Um eine Inbetriebnahme der Steuerung und der Schaltungsanordnung 2 zur Durchführung des Verfahrens zur Unterdrückung von mechanischen Schwingungen zu vereinfachen, ist von Vorteil, auch diesen invertierenden Zusatzstromsollwert $\overline{u_{ZIs}}$ aus der Schaltungsanordnung herauszuführen, wobei der Zusatzstromsollwert $u_{ZIs}$ und der invertierende Zusatzstromsollwert $\overline{u_{ZIs}}$ über einen Kreuzschalter dem Summierglied 26 zuführbar sind. Außerdem ist es ratsam, zwischen, dem Hochpaß 14 und dem Bandpaßfilter 16 einen bekannten Pegelumsetzer einzufügen, damit die mechanische Schwingungsamplitude dem Spannungshub der Schaltungsanordnung angepaßt ist.

### Ansprüche

1. Verfahren zur Unterdrückung von mechanischen Schwingungen ($u_{Wni}$), die von einer mittels eines stromrichtergespeisten Motors (4) angetriebenen Last (6) erzeugt und einem Drehzahlistwert ($u_{ni}$) überlagert sind, **dadurch gekennzeichnet,** daß durch Auskopplung eines Gleichspannungsanteils ($u_{Gni}$) des Drehzahlistwertes ($u_{ni}$) ein Wechselspannungsanteil ($u_{Wni}$) erzeugt wird, der in eine Rechteckspannung ($u_{Nni}$) gewandelt wird, deren Polarität und Frequenz zur Polarität und Frequenz des Wechselspannungsanteils ($u_{Wni}$) des Drehzahlistwertes ($u_{ni}$) ist, daß aus dem Wechselspannungsanteil ($u_{Wni}$) eine Resonanzschwingung herausgefiltert und anschließend deren Betragsspannung ($u_{Fni}$) gebildet wird, und daß diese Betragsspannung ($u_{Fni}$) mittels der Rechteckspannung ($u_{Nni}$) zerhackt und proportional zu deren Polarität zu einem Zusatzstromsollwert ($u_{ZIs}$) gewichtet zusammengesetzt wird.

2. Schaltungsanordnung zur Durchführung des Verfahrens nach Anspruch 1, wobei eine Last (6) mittels eines stromrichtergespeisten Motors (4) angetrieben wird, dessen Drehzahlistwert ($u_{ni}$) von mechanischen Schwingungen ($u_{Wni}$) der Last (6) überlagert ist, **dadurch gekennzeichnet, daß** der Drehzahlistwert ($u_{ni}$) einem Hochpaß (14) zuführbar ist, dessen Ausgang einerseits mit einem Komparator (20) und andererseits mit einem Bandpaßfilter (16) mit nachgeschaltetem Betragsbildner (18) verknüpft ist, dem ein Zusatzsollwertbildner (22) nachgeschaltet ist, dessen zweiter Eingang (38) mit dem Ausgang des Komparators (20) verbunden ist.

3. Schaltungsanordnung nach Anspruch 2, **dadurch gekennzeichnet,**
daß als Bandpaßfilter (16) ein Filter zweiter Ordnung vorgesehen ist.

88 P 3339

FIG 1

FIG 6

FIG 2

FIG 3

FIG 4

FIG 5

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4295081 (W.J. BIGLEY, JR. ET AL) <br> * das ganze Dokument * <br> --- | 1, 2 | H02P5/40 |
| A | PATENT ABSTRACTS OF JAPAN <br> vol. 10, no. 278 (P-499)(2334) 20 September 1986, <br> & JP-A-61 098416 (HITACHI LTD) <br> * das ganze Dokument * <br> --- | 1, 2 | |
| A | IEEE TRANSACTIONS ON INDUSTRY APPLICATIONS <br> vol. IA-23, no. 5, 1987, US <br> Seiten 863 - 871; TSUTOMU OHMAE ET AL: <br> "A MICROPROCESSOR-BASED MOTOR SPEED REGULATOR USING FAST-RESPONSE STATE OBSERVER FOR REDUCTION OF TORSIONAL VIBRATION" <br> * das ganze Dokument * <br> --- | 1, 2 | |
| A | US-A-4406642 (F.M. MCNALL) <br> * Zusammenfassung; Figur 2 * <br> ------ | 1, 2 | |

| RECHERCHIERTE SACHGEBIETE (Int. Cl.5) |
|---|
| H02P <br> G05D <br> H02K |

Der vorliegende Recherchenbericht wurde für alle Patentansprüche erstellt

| Recherchenort | Abschlußdatum der Recherche | Prüfer |
|---|---|---|
| DEN HAAG | 06 NOVEMBER 1989 | BEYER F. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

......................................................................
& : Mitglied der gleichen Patentfamilie, übereinstimmendes Dokument

EPO FORM 1503 03.82 (P0403)